## Europäisches Patentamt
## European Patent Office
## Office européen des brevets

(11) Publication number: **0 085 171**
**B1**

(12) **EUROPEAN PATENT SPECIFICATION**

(45) Date of publication of patent specification: **13.04.88**

(51) Int. Cl.⁴: **B 01 J 4/02**, G 01 F 11/02

(21) Application number: **82111717.3**

(22) Date of filing: **17.12.82**

(54) Solvent delivery system.

(30) Priority: **29.01.82 US 343807**

(43) Date of publication of application:
**10.08.83 Bulletin 83/32**

(45) Publication of the grant of the patent:
**13.04.88 Bulletin 88/15**

(84) Designated Contracting States:
**CH DE FR GB IT LI NL SE**

(56) References cited:
**CH-A- 604 136**
**DE-A-1 473 109**
**FR-A-2 466 773**
**US-A-3 620 134**
**US-A-4 045 343**

(73) Proprietor: **THE PERKIN-ELMER CORPORATION**
**761 Main Avenue**
**Norwalk Connecticut 06856-0181 (US)**

(72) Inventor: **Schmid, Carl E.**
**99 Buck Hill Road**
**Easton Connecticut 06612 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a fluid pumping system comprising: a positive displacement delivery pump including a cylinder, a piston disposed for reciprocation in the cylinder and means defining inlet and outlet flow passages in communication with said cylinder; a positive displacement metering pump including a cylinder, a piston disposed for reciprocation in said cylinder and means defining inlet and outlet flow passages in communication with the cylinder; drive means for imparting reciprocative motion in said pistons. The invention particularly relates to a solvent delivery system and especially to such a system including two synchronized pistons adapted to serially transport solvent mixtures of successively varying composition to a chromatographic fractionating column.

The advent of solvent gradient analysis in the field of liquid chromatography has resulted in the need for improved delivery systems, i.e., means for delivering solvent mixtures, or compositions, from a solvent reservoir to the chromatographic column. The major difficulty is to satisfy the requirements to change the solvent composition while delivering a small volume thereof to the column, to select low stable percentage composition levels and to maintain a uniform flow rate to the column while column pressure changes. To date, these requirements have been difficult to simultaneously satisfy with either "pre-pump gradient systems" or "post-pump gradient systems".

A conventional post-pump gradient former generally includes a separate pump and water for each solvent. Because the flow rate of each pump varies during each cycle of the pump, this system requires a mixer to smooth out the composition variations which occur where the two solvent streams are joined. The inclusion of such a mixer increases the volume and thus the time required to change composition levels. A further problem is that solvents having different viscosities are often used to form a single solvent composition. When the solvent composition is changed, the column pressure changes which in turn changes the flow rate of one or more of the solvents. That is, each pump operates under the same pressure change, and thus the volume of each solvent pumped will depend upon its compressibility. Thus, each solvent has a different flow rate. Hence, the solvent composition is always somewhat in error.

A conventional pre-pump gradient system generally includes a single motor and pump. In such a system the solvent composition is generated by low pressure valves selecting solvents during the refill stroke of the delivery piston. One inherent disadvantage of such a system is the conflicting requirements on the time allowed to refill the delivery piston cylinder. The conflicting requirements are that to maintain uniform flow to the column it is required to reduce the refill time as much as possible, but reducing the refill time increases the average flow rate through the solvent selector valves to a level where the finite valve switching time limits the minimum controllable volume and hence limits the minimum controllable composition level. Additionally, valve switching is complicated by the non-linear flow of solvents through the valves during refill.

One practical solution is a delivery system which includes a pulse damper, a discrete mixing chamber and correction curves relating valve programming to particular solvent compositions.

In DE—A—14 73 109 a pump system had already been described, in which in two cylinders two pistons connected through a common piston plunger are arranged on the same horizontal axis and may be reciprocated by a single drive means. A first pump formed by one of the cylinders and one of the pistons is connected via a unidirectional valve with the working chamber of this first pump on the one hand and a storage bunker on the other hand. The working chamber of the first pump furthermore is connected via a second unidirectional valve with an output line, the end of which is positioned above a measuring cylinder. The bottom of this measuring cylinder is on the other hand connected via another line and a unidirectional valve with the working chamber of a second pump formed by the second cylinder and the second piston. Furthermore, this working chamber is connected via another unidirectional valve with a pipe, through which a fluid is passed. The operation of this double-pump-system is such that the first pump soaks during its retraction stroke solvent from the storage bunker. During the pumping stroke of the first pump, the first unidirectional valve is closed and the solvent within the working chamber is passed through the second unidirectional valve, which is opened, and the connected line into the measuring cylinder. Since the volume of the working chamber of the first pump is greater than the volume of the measuring cylinder, some of the solvent will overflow at the upper end of the measuring cylinder and back to the solvent storage bunker. During the following retraction stroke of the piston of the second pump the solvent within the filled measuring cylinder is pumped into the working chamber of the second pump. During the following pumping stroke the unidirectional valve connecting the working chamber and the measuring cylinder is closed and the solvent within the working chamber is transferred via the second unidirectional valve into the pipe, through which the above mentioned fluid is passed.

Accordingly, one object of the present invention is to provide a solvent delivery system which maintains a substantially uniform solvent delivery flow of selected solvent compositions without the need for a discrete mixer.

Another subject of the present invention is to provide such a solvent delivery system which is time independent of the valves controlling the flow of the individual solvents.

According to the invention a fluid pumping system of the above mentioned type is provided which is characterized by a relatively slow advance stroke and rapid retraction stroke of the delivery pump piston; unidirectional flow passage means hydraulically coupling the outlet flow passage of said metering pump cylinder to the inlet flow passage of said delivery pump; means including a lost motion coupling between the respective pistons of said pumps for imparting reciprocative motion to said metering pump piston and the piston of said delivery pump, whereas the two pistons are cooperating functionally 180° out of phase, said lost motion coupling accommodating limited relative displacement between said pistons at the start of the pumping stroke of said delivery pump piston, said lost motion coupling further including an electrical switch, closure of which limits said relative motion to signal the start of the retraction stroke of the metering pump piston.

Other preferred embodiments are described in the subclaims, the wording of which is expressively included in the present specification.

These objects are achieved, at least in part, by a solvent delivery system including two synchronized pistons adapted to serially transport successive solvent compositions from one piston to the other piston prior to delivery to a column apparatus.

Other objects and advantages will become apparent to those skilled in the art from the following detailed specification in conjunction with the appended drawing.

Brief description of the drawing

The drawing, which is not drawn to scale, includes:

Figure 1, which is a schematic representation of a solvent delivery system embodying the principles of the present invention;

Figure 1A, which is a plane view of a cam useful in the system of Figure 1; and

Figures 2A—2H, which are timing diagrams showing the dynamic relationship between the elements of the system shown in Figure 1.

Detailed description of the invention

A solvent delivery system, generally indicated at 10 in the drawing and embodying the principles of the present invention, includes a pumping piston 12 having a pumping piston cylinder 14 associated therewith and a metering piston 16 having a metering piston cylinder 18 associated therewith. The system 10 further includes a means 20 for controlling the movement of the pumping piston, as well as a means 22 for passively synchronizing the movement of the metering piston 16 to the movement of the pumping piston 12. Thus, via the means 22 the metering piston 16 is slaved to the pumping piston 12. The system 10 further includes a plurality of solvent sources 24, or reservoirs, individually designated as A, B, C and D and conduit means 26, 28 and 30 for conveying solvents, respectively, from the reservoirs 24 to the metering piston cylinder 18, from the metering cylinder 18 to the pumping piston cylinder 14, and from the pumping piston cylinder 14 to a chromatography column (not shown).

In a specific embodiment, the means 20 for controlling the movement of the pumping piston includes a stepper motor 32 which rotates through a predetermined angle in response to each electrical pulse provided thereto. Stepper motors are well known in the electrical art and as such, a detailed description thereof is deemed unnecessary herein. However, in this particular embodiment the stepper motor 32 is designed to have 400 steps for each complete rotation. Further, it is preferred that the stepper motor 32 be provided with an electrical signal having a maximum frequency of 5000 pulses per second. Thus, the stepper motor 32 rotates at a maximum speed of 12.5 revolutions per second. The electrical signal is provided by a system control circuitry 34. The system control circuitry 34 referred to herein is explained in detail in a co-pending patent application EP—A—85172, and which is incorporated by reference herein.

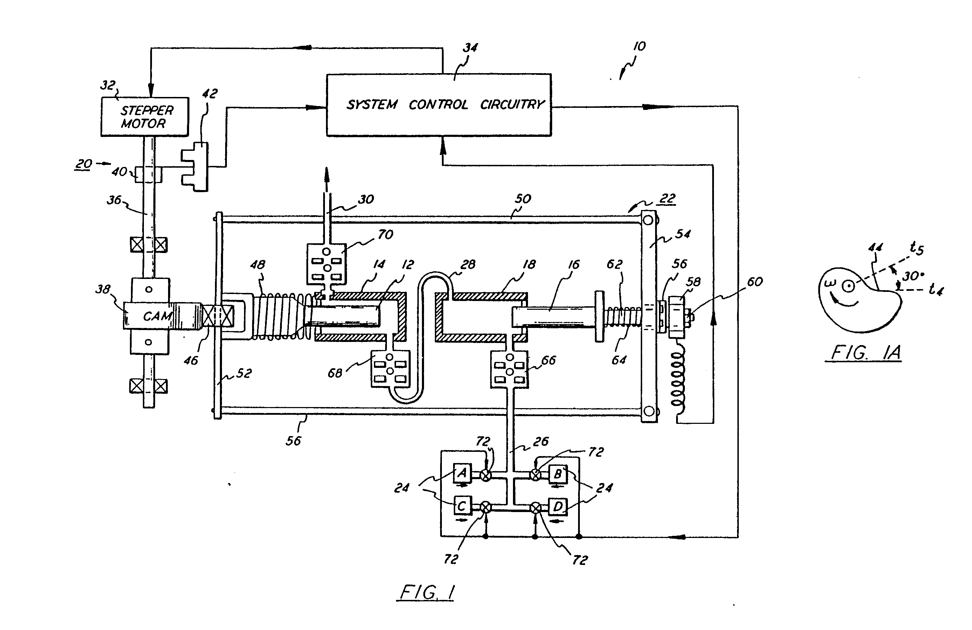

A shaft 36 is driven by stepper motor 32 through a four to one reduction (not shown) and is rotated thereby. Preferably, the shaft 36 carries a cam 38 and a shaft position indicator 40 thereon. The shaft position indicator 40 provides a signal, via a transducer 42, for example, to the control circuitry 34 for use thereby in coordinating the system operation. The cam 38 preferably has a profile 44, i.e., a peripheral contour, as shown in Figure 1A. The cam 38 is contacted by a cam follower 46 which is adapted to translate the rotational movement of the cam 38 into linear motion of the pumping piston 12 within the pumping piston cylinder 14. Preferably, the pumping piston 12 includes a biasing means 48 associated therewith which maintains the cam follower 46 against the cam 38. The particular biasing means 48 employed is arbitrary, although a return spring mechanism is preferred.

Although discussed in more detail in the above-mentioned copending patent application EP—A—85172, it should be noted herein that the electrical signal from the transducer 42 associated with the shaft position indicator 40 can be, in fact, used as a pumping piston position indicator for the control circuitry 34.

As aforestated, the metering piston 16 is passively synchronized with the pumping piston 12 by the means 22, which in this embodiment is a pair of tie rods 50 together with piston linkages 52 and 54. As shown in Figure 1, the piston linkage 52 connects the tie rods 50 to the pumping piston 12 and the piston linkage 54 connects the tie rods 50 to the metering piston 16. Thus, the movement of both the metering piston 16 and the pumping piston 12 is controlled by the single stepper motor 32.

The pumping piston 12 and the metering piston 16, via the means 22, are synchronized such that when the pumping piston 12 has reached the end of its pumping stroke, i.e., the pumping cylinder 14 is effectively empty, the metering piston 16 reaches the end of its intake stroke, i.e., the metering cylinder 18 is full, and vice versa. Hence, the total internal volume is fixed, and the inlet flow to the metering piston cylinder 18 is, for all intents and purposes, the same as the outlet flow from the pumping piston cylinder 14.

In one specific embodiment, an electrical contact 56 is carried on the piston linkage 54 associated with the metering piston 16. A comparatively adapted electrical contact 58 is affixed to one end 60 of a shaft 62 extending from the metering piston 16. The contact 56 and contact 58 are arranged such that a circuit is completed, i.e., the contact 56 makes connection with the contact 58 when solvent delivery from the sources 24 to the metering piston cylinder 18 begins. When the linkage 54 forces the metering piston cylinder 16 to begin emptying the metering piston cylinder 18, the circuit is opened in preparation for the next cycle.

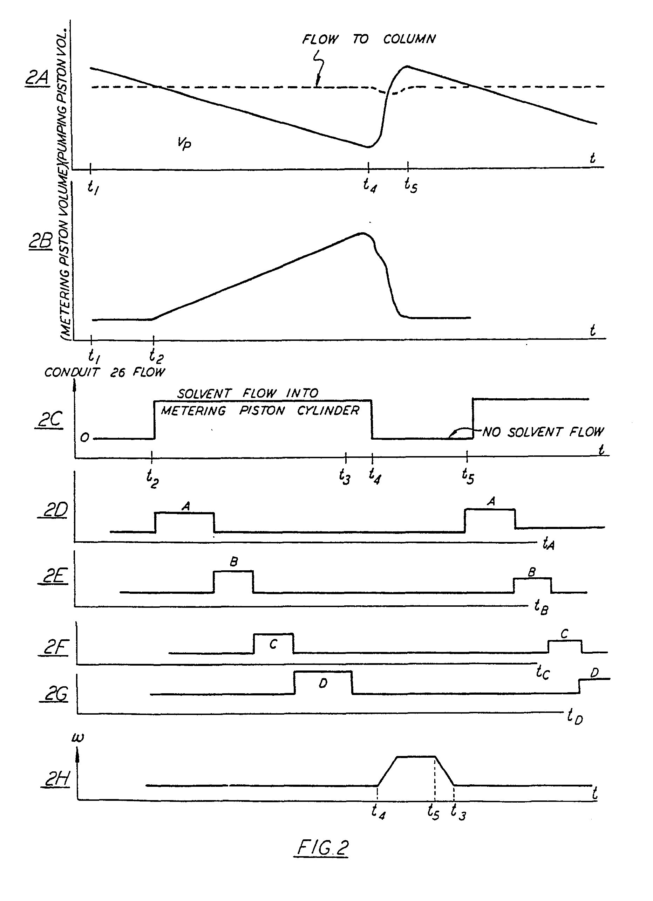

Preferably, in the above arrangement, the metering piston 16 is provided with a bias spring 64 which holds the contact 56 against contact 58 when the pressure in the metering piston cylinder 18 is below a fixed level set by the bias spring; in this case 100 p.s.i. (6,8 bars) is chosen. Thus, an electrical signal is provided at $t_2$ Figure 2C, marking the beginning of solvent flow into the metering piston cylinder 18. The end of flow is marked at $t_4$, Figure 2C, at which point the cam 38 has reached its high point. This point is marked electrically by sensor 42. Thus, the volume entering the metering piston cylinder is available as an electrical analog to be computed by the system control circuitry 34 from the number of steps representing position of the metering piston 16 occurring within the signal transitions $t_2$ and $t_4$. This volume, so derived, is the analog of the volume at 100 p.s.i. of mixture which left the pumping piston cylinder 14 on the previous stroke. The availability of this analog volume signal allows the system control circuitry 34, for instance, to program the valves A, B, C and D Figures 2D through 2G, such that the number of stepper motor 32 pulses any one valve is open $(N_A)$ as compared to the correct number of stepper motor pulses between $t_2$ and $t_4$ $(N_T)$ is the desired $N_A$. That is $\%A = N_A/N_T$ and the composition so generated is independent of the column back pressure. Furthermore, the accumulation of $N_T$ is a direct analog of the total volume of mixture referred to 100 p.s.i. which leaves the solvent delivery system. This analog signal is available to define column retention volume for eluting peaks.

Preferably, the metering piston 16 has a diameter of about 0.417 cm, whereas the pumping piston 12 has a diameter of about 0.390 cm. By making the metering piston 16 somewhat larger in diameter than the pumping piston 12, not only is complete filling of the pumping piston cylinder 14 assured, but also the breaking of the contacts 58 and 56 is ensured.

The above-described system 10 can be further optimized by minimizing the volumes of the fluid carrying conduits 26, 28 and 30 therein. Specifically, the conduit means 26 connects the solvent sources 24 to the inlet of the metering piston cylinder 18. Fluid flow therethrough is controlled by a single set of ball check valves 66. The conduit means 28 connects the outlet of the metering piston cylinder 18 to the inlet of the pumping piston cylinder 14. Fluid flow therethrough is controlled via a single set of ball check valves 68. The conduit means 30 connects the outlet of the pumping piston cylinder 14 to the remainder of the chromatography system and fluid flow therethrough is controlled by a single set of ball valves 70. Thus, from the solvent sources 24 through the outlet of the pumping piston cylinder 14 there is a minimal amount of fluid conduit and only three sets of check valves, 66, 68 and 70. Further, although each undivided solvent source 24 includes a solvent source valve 72, the opening and closing thereof occurs during the refilling of the metering piston cylinder 18 and not during the refilling of the pumping piston cylinder 14. Thus, the non-pumping time of the system can and, in fact, is minimized independent of valve switching speed limitations.

Referring now to the timing diagrams of Figure 2, the operation of the system 10 will be discussed in detail. Specifically, as shown in Figures 2A and 2B at $t_1$, the pumping piston cylinder 14 has a fluid volume $V_P$ therein which is at its maximum and, as shown in Figure 2B, the volume $V_M$ in the metering piston cylinder 18 is at its minimum. At time $t_1$, the pumping piston 12 begins motion into the pumping piston cylinder 14 to empty the contents thereof into the column, the metering piston 16 initially remains stationary while the gap between contacts 56 and 58 narrows while the pressure in the metering cylinder 18 remains essentially constant until time $t_2$ when contact 56 touches contact 58 providing a continuity signal and simultaneously initiating the uniform retraction of the metering piston 16. The metering piston is then retracted at a uniform rate until $t_4$, at which time the cam 44 is at its highest point, the metering piston cylinder 18 is completely filled and the pumping piston cylinder 14 is completely emptied.

The pumping piston 12 then withdraws and the metering piston 16 pumps the solvent from the metering piston cylinder 18 to the pumping piston cylinder 14 between $t_4$ and $t_5$. The short time interval, $t_4$ to $t_5$, is achieved by employing a cam profile as shown in Figure 1A and programming the stepper motor angular velocity profile as shown in Figure 2H. The combination of these two factors results in a very short pumping piston cylinder 14 refill time. Also, during the pumping piston cylinder 14 refill period $t_4$ to $t_5$, the contact 56 separates from contact 58 compressing spring 64 as a result of the hydraulic pressure in metering piston cylinder 18 resulting from the slightly larger diameter metering piston 16 not being required to travel as far as the smaller pumping piston 12 while filling the pumping piston cylinder 14. This relation of metering piston 16 to pumping piston 12 ensures that the pumping piston cylinder 14 is totally filled at a positive pressure and also that when the metering piston contact 58 touches contact 56 marking the beginning of flow into the metering pump cylinder 18 the deceleration of the cam angular speed ω has settled out to the nominal steady state value dictated by the desired flow. Figure 2H shows the transient is completed at $t_3$ and Figure 2C shows solvent flow into the metering piston begins at $t_5$ where ω is stable.

Figures 2D through 2G are representations of solvent flow from each of the solvent sources 24 during the time interval $t_2$ to $t_4$. Preferably, the sources 24 are all under the same pressure, which is relatively low, i.e., about 5 p.s.i. (0,34 bars). This pressure is much larger than the pressure drop caused by the flow into the metering piston cylinder 18 passing through valves 72, conduit 26 and input check valve 66. As a result, the flow into the metering pump piston cylinder 18 occurs at a slow uniform rate dictated by the metering piston 16 velocity and at a low fixed pressure of approximately 5 p.s.i. throughout. Thus, mixing occurs at constant pressure and constant flow and is independent of column pressure drop.

In actual practice, the metering piston inlet check valve 66 requires a small but finite reverse flow to occur before closing. To prevent this transient from damaging the solvent control valves 24 and to improve the low level composition performance, the system control circuitry, preferably adjusts the solvent selector valves 72 such that the majority solvent valve is open during the transitions at $t_2$ and $t_4$ and remains open during the interval from $t_4$ to $t_5$ even though no flow occurs for the majority of the $t_4$ and $t_5$ interval. Thus, one solvent selector valve 24 is always open. Also, in practice, the inlet flow to the metering piston cylinder 18 is free of transients for valves 24 that are programmed to open at a phase removed from the ends $t_2$ and $t_4$. For this reason, it is preferred that the system control circuitry open the lowest composition solvent valves open near the middle of the $t_2$ to $t_4$ refill interval.

The major advantage of the solvent delivery system 10 described herein can be recognized from the dotted line shown in Figure 2A which represents the flow to the column from the system 10. As shown, the column flow is substantially constant, which is ideal in liquid chromatography. In fact, the only deviation from the uniform flow occurs during transfer of the solvent composition from the metering cylinder 18 to the pumping cylinder 14. This, of course, has been minimized by providing a positive pressure means of transferring the mixture from the metering pump cylinder 18 to the pumping cylinder 14. In practice, the transfer time is limited by the dynamic response of the stepper motor.

Mixing of the components of the solvent composition occurs not only from the serial delivery thereof into the metering cylinder but also from the delivery thereof to the pumping piston cylinder 14. Further mixing occurs when the solvent composition is pumped from the pumping piston cylinder 14. Thus, the solvent composition is thoroughly mixed without the need for a discrete solvent apparatus.

Although a specific example has been described herein, other configurations are anticipated which do not deviate from the present invention. Hence, the description herein is deemed as exemplary and not as limiting, and the present invention is considered to be limited only by the claims appended hereto and the reasonable interpretation thereof.

**Claims**

1. A fluid pumping system comprising:
a positive displacement delivery pump (12, 14) including a cylinder (14), a piston (12) disposed for reciprocation in the cylinder and means defining inlet and outlet flow passages in communication with said cylinder (14);
a positive displacement metering pump (16, 18) including a cylinder (18), a piston (16) disposed for reciprocation in said cylinder and means defining inlet and outlet flow passages in communication with the cylinder (18);
drive means (32, 36, 38) for imparting reciprocative motion to said pistons (12, 16), characterized by
a relatively slow advance stroke and rapid retraction stroke of the delivery pump piston (12);
unidirectional flow passage means (28, 68) hydraulically coupling the outlet flow passage of said metering pump cylinder (18) to the inlet flow passage of said delivery pump (12, 14);
means (22) including a lost motion coupling between the respective pistons (12, 16) of said pumps for imparting reciprocative motion to said metering pump piston and the piston of said delivery pump, whereas the two pistons (12, 16) are cooperating functionally 180° out of phase, said lost motion coupling accommodating limited relative displacement between said pistons (12, 16) of the start of the pumping stroke of said delivery pump piston (12), said lost motion coupling further including an electrical switch (56, 58), closure of which limits said relative motion to signal the start of the retraction stroke of the metering pump piston (12).

2. A fluid pumping system according to claim 1 characterized in that the volumetric displacement of said metering pump (16, 18) slightly exceeds that of the delivery pump (12, 14).

3. A fluid pumping system according to claim 2 characterized in that said drive means includes a stepper motor (32), driven cam (38) and electrical control circuit means (34) controlling the rate of rotation of said motor.

4. A fluid pumping system according to claim 3 characterized in that said circuit means (34) is programmed to accelerate the rotational speed of said motor (32) during the retraction stroke of the delivery pump piston (12).

5. A fluid pumping system according to anyone of the claims 1 to 4, characterized by:

second unidirectional fluid flow outlet means (70) for said cylinder (14) of said first pump (12, 14); and

third unidirectional fluid flow inlet means (66) for the cylinder (18) of said second pump (16, 18).

6. A fluid pumping system according to anyone of the claims 1 to 5, characterized in that said lost motion coupling (22) further includes resilient means (64) biasing the displacement of the metering pump piston (16) in the advance direction with a force determinative of the pressure of fluid in the cylinder (18) of said metering pump during the advance stroke (emptying stroke) of the piston (16) therein.

7. A fluid pumping system according to claim 6 characterized in that said drive means (32, 38) includes a cam (38) having a profile (44) determinative of the displacement pattern of the piston (12) of said delivery pump (12, 14), said profile (44) causing rapid retraction of said delivery pump piston (12) occurring over a very minor fraction of a single revolution of said cam (38) and a relatively slower and uniform rate of travel during the advance stroke (pumping stroke) of said piston (12).

8. A fluid pump system according to claim 7 characterized in that said drive means further includes a stepper motor (32) coupled to rotate said cam (38) and electrical circuit means (34) for controlling said stepper motor.

9. A fluid pumping system according to anyone of the claims 1 to 8, characterized in that

coupling means includes a yoke (22) having a positive connection to the piston (12) of the delivery pump (12, 14) and a lost motion connection to the piston (16) of the metering pump (16, 18), said lost motion connection permitting limited relative displacement of said pistons (12, 16) at the start of both the retraction (intake) and advance (pumping) strokes of the delivery pump piston (12);

the said electrical switch (56, 58) having respective electrical contact members on said yoke (22) and the metering pump piston (16) disposed for abutment to define the limit of lost motion travel in one direction between said yoke (22) and piston (16) and close the switch to signal the start of the retraction stroke (intake stroke) of said metering pump piston (16);

resilient bias means (64) acting between said yoke (22) and metering pump piston (16) to urge said yoke (22) and piston (16) toward said limit with a force determinative of the pressure of fluid in the metering pump cylinder (18) at the start of the advance stroke (emptying stroke) of the metering pump piston (16).

10. A fluid pumping system according to anyone of the claims 3 to 9, characterized by:

sensor means (40) effective to detect the angular position of said cam (38) and signal the end of the retraction stroke of the metering pump piston (16); and

system control circuit means (34) electrically coupled to receive signals from said electrical switch (56, 58) and from said sensor means (40) to generate output signals controlling said stepper motor (32).

11. A fluid pumping system according to anyone of the claims 5 to 10 characterized by:

a plurality of sources (24) of selected solvents and flow passage means (26) connecting said sources to said third unidirectional flow inlet means (66) for the cylinder (18) of said second pump;

respective electrically-operated valves (72) operable to control flow from said sources (24) to said third unidirectional inlet means (66); and

means electrically connecting said valves (72) to receive the control signal from said electrical circuit means (34).

12. A fluid pumping system according to claim 11, characterized in that said electrical control circuit means (34) is programmed to open said electrically actuated valves (72) only during the retraction stroke of the metering piston (16).

13. A fluid pumping system according to anyone of the claims 1 to 12, characterized in that the fluid pumping system is used as a solvent delivery system for high pressure liquid chromatographs.

## Patentansprüche

1. Fluidpumpsystem mit einer Verdrängungsabgabepumpe (12, 14), die einen Zylinder (14), einen Kolben (12), der in dem Zylinder eine hin- und hergehende Bewegung ausführt und Einrichtungen, die Einlaß- und Auslaßleitungen in Verbindung mit dem Zylinder (14) bilden, umfaßt, mit siner Verdrängungszumeßpumpe (16, 18), die einen Zylinder (18), einen Kolben (16), der in dem Zylinder eine hin- und hergehende Bewegung ausführen kann und Einrichtungen, die Einlaß- und Auslaßleitungen in Verbindung mit dem Zylinder (18) bilden, umfaßt und mit einer Antriebseinrichtung (32, 36, 38), zu hin- und hergehenden Bewegungsbeaufschlagung des Kolbens (12, 16), dadurch gekennzeichnet, daß der Kolben (12) der Verdrängungspumpe einen relativ langsamen Vorwärtshub und einen schnellen Rückzugshub ausführt; daß eine in einer Richtung wirkende Leitungsverbindung (28, 68) die Auslaßleitung des Zumeßpumpenzylinders (18) mit der Einlaßleitung der Abgabepumpe (12, 14) verbindet; daß eine Einrichtung (22) vorhanden ist, die eine Totgangkupplung zwischen den entsprechenden Kolben (12, 16) der Pumpen umfaßt, um so eine hin- und hergehende Bewegung des Kolbens der Zumeßpumpe und des Kolbens der Abgebepumpe hervorzurufen, wobei die beiden Kolben (12, 16) um 180° phasenverschoben zueinander funktionell zusammenarbeiten und wobei die Totgangkupplung eine begrenzte Relativverschiebung zwischen den Kolben (12, 16) am Anfang des Pumpenhubs des Abgabepumpenkolbens (12) aufnimmt, wobei diese Totgangkupplung weiterhin einen elektrischen Schalter (56, 58) umfaßt, dessen Schließen die Relativbewegung begrenzt, um den Start des Rückzugshubs des Zumeßpumpenkolbens (12) anzuzeigen.

2. Fluidpumpsystem nach Anspruch 1, dadurch gekennzeichnet, daß die volumetrische Verschiebung der Zumeßpumpe (16, 18) die volumetrische Verschiebung der Abgebepumpe (12, 14) leicht übersteigt.

3. Fluidpumpsystem nach Anspruch 2, dadurch gekennzeichnet, daß die Antriebseinrichtung eine von einem Schrittschaltmotor (32) angetriebene Steuerkurve (38) und einen elektrischen Steuerschaltkreis (34) aufweist, der die Drehbewegung des Motors steuert.

4. Fluidpumpsystem nach Anspruch 3, dadurch gekennzeichnet, daß der Schaltkreis (34) so ausgelegt ist, daß die Rotationsgeschwindigkeit des Motors (32) während der Rückzugesbewegung des Abgabepumpenkolbens (12) beschleunigt wird.

5. Fluidpumpsystem nach irgendeinem der Ansprüche 1 bis 4, gekennzeichnet durch: eine zweite in einer Richtung wirkende Durckflußauslaßleitung (70) für den Zylinder (14) der ersten Pumpe (12, 14) und eine dritte in einer Richtung wirkende Fluideinlaßeinrichtung (66) für den Zylinder (18) und die zweite Pumpe (16, 18).

6. Fluidpumpsystem nach irgendeinem der Ansprüche 1 bis 5, dadurch gekennzeichnet, daß die Totgangkupplung (22) eine federnde Einrichtung (64) aufweist, die dem Zumeßpumpenkolben (16) in Vorwärtsrichtung mit einer Kraft vorspannt, die den Fluiddruck in dem Zylinder (18) der Zumeßpumpe während der Vorwärtsbewegung (entleerender Hub) des Kolbens (16) festlegt.

7. Fluidpumpsystem nach Anspruch 6, dadurch gekennzeichnet, daß die Antriebseinrichtung (32, 38) eine Steuerkurve (38) aufweist, deren Profil (44) des Verschiebemuster des Kolbens (12) der Abgabepumpe (12, 14) festlegt, wobei das Profil (44) so ausgelegt ist, daß bei einer einzelnen Umdrehung der Steuerkurve (38) über einen sehr kleinen Teil eine schnelle Rückzugsbewegung des Abgabepumpenkolbens (12) bewirkt wird und daß die Bewegung während der Vorwärtsbewegung (Pumphub) des Kolbens (12) relativ langsamer und mit einer gleichförmigen Bewegungsgeschwindigkeit erfolgt.

8. Fluidpumpsystem nach Anspruch 7, dadurch gekennzeichnet, daß die Antriebseinrichtung weiterhin einen Schrittschaltmotor (32) aufweist, der zum Antrieb der Steuerkurve (38) dient und daß der Schrittschaltmotor über einen elektrischen Schaltkreis (34) gesteuert wird.

9. Fluidpumpsystem nach irgendeinem der Ansprüche 1 bis 8, dadurch gekennzeichnet, daß die Kupplungseinrichtung ein Joch (22) aufweist, das eine positive Verbindung mit dem Kolben (12) der Abgabepumpe (12, 14) aufweist sowie eine Totgangverbindung mit dem Kolben (16) der Zumeßpumpe (16, 18), wobei die Totgangverbindung eine begrenzte Relativverschiebung der Kolben (12, 16) beim Beginn der Rückzug(Ansaug)-Bewegung und der Vorwärts(Pump)-Bewegungen des Ansaugpumpenkolbens (12) ermöglicht; daß der elektrische Schalter (56, 58) entsprechende elektrische Anschlußelemente an dem Joch (22) und dem Zumeßpumpenkolben (16) aufweist, die als Anschläge ausgebildet sind, um das Ende der Totgangbewegung in der einen Richtung zwischen dem Joch (22) und dem Kolben (16) festzulegen und um den Schalter zu schließen, so daß der Beginn der Rückzugsbewegung (Ansaugbewegung) des Zumeßpumpenkolbens (16) angezeigt wird; und

daß zwischen dem Joch (22) und dem Zumeßpumpenkolben (16) eine federnde Vorspanneinrichtung (64) wirkt, die das Joch (22) und dem Kolben (16) mit einer Kraft in Richtung auf die Begrenzung beaufschlägt, wobei diese Vorspanneinrichtung den Fluiddruck im Zumeßpumpenzylinder (18) zu Beginn des Vorwärtshubs (Entleerhub) des Zumeßpumpenkolbens (16) festlegt.

10. Fluidpumpsystem nach irgendeinem der Ansprüche 3 bis 9, gekennzeichnet durch: eine Sensoreinrichtung (40), die die Winkellage der Steuerkurve (38) erfaßt und die das Ende der Rückzugsbewegung des Zumeßpumpenkolbens (16) anzeigt und durch einen Systemsteuerschaltkreis (34), der elektrisch so angeschlossen ist, daß er Signale von dem elektrischen Schalter (56, 58) und von dem Sensor (40) empfängt, um so Ausgangssignale zur Steuerung des Schrittschaltmotors (32) zu erzeugen.

11. Fluidpumpsystem nach irgendeinem der Ansprüche 5 bis 10, gekennzeichnet durch: mehrere Quellen (24) ausgewählter Lösungsmittel und durch eine Durchflußleitungseinrichtung (26), die diese Quellen mit der dritten in einer Richtung wirkenden Einlaßleitung (66) für den Zylinder (18) der zweiten Pumpe verbindet; durch jeweils elektrisch betätigte Ventile (72), die den Durchfluß von den Quellen (24) zu der dritten in einer Richtung wirkenden Einlaßeinrichtung (66) steuern und durch eine Einrichtung, die die Ventile (72) elektrisch so anschließt, daß sie Steuersignale von dem elektrischen Schaltkreis (34) empfangen.

12. Fluidpumpsystem nach Anspruch 11, dadurch gekennzeichnet, daß der elektrische Steuerschaltkreis (34) so ausgelegt ist, daß die elektrisch betätigten Ventile nur während der Rückzugsbewegung des Zumeßkolbens (16) öffnen.

13. Fluidpumpsystem nach irgendeinem der Ansprüche 1 bis 12, dadurch gekennzeichnet, daß das Fluidpumpsystem als Lösungsmittelabgabesystem für Hochdruckflüssigkeitschromatographen verwendet wird.

**Revendications**

1. Système de pompage de fluide comprenant:
— une pompe de fourniture à déplacement positif (12, 14) comportant un cylindre (14), un piston (12) disposé de façon à aller et venir dans le cylindre, et un moyen définissant des passages d'écoulement d'entrée et de sortie en communication avec ledit cylindre (14);
— une pompe à débit étalonné à déplacement positif (16, 18), comportant un cylindre (18), un piston (16) disposé de façon à aller et venir dans ledit cylindre et un moyen définissant des passages d'écoulement d'entrée et de sortie en communication avec le cylindre (18);

—un moyen d'entraînement (32, 36, 38) pour conférer un mouvement de va-et-vient auxdits pistons (12, 16), caractérisé par:

—une course d'avance relativement lente et une course de rétraction rapide du piston de la pompe de fourniture (12);

—un moyen formant passage d'écoulement unidirectionnel (28, 68), reliant hydrauliquement le passage d'écoulement de sortie dudit cylindre (18) de la pompe à débit étalonné au passage d'écoulement d'entrée de ladite pompe de fourniture (12, 14);

—un moyen (22) comportant un couplage à mouvement libre entre les pistons respectifs (12, 16) desdites pompes, pour conférer un mouvement de va-et-vient audit piston de la pompe à débit étalonné et au piston de ladite pompe de fourniture, alors que les deux pistons (12, 16) coopèrent fonctionnellement en étant déphasés de 180°, ledit couplage à mouvement libre tenant compte du déplacement relatif limité entre lesdits pistons (12, 16) au début de la course de pompage dudit piston (12) de la pompe de fourniture, ledit couplage à mouvement libre comportant en outre un commutateur électrique (56, 58) dont la fermeture limite ledit mouvement relatif pour signaler le début de la course de rétraction du piston (12) de la pompe à débit étalonné.

2. Système de pompage de fluide selon la revendication 1, caractérisé en ce que le déplacement volumétrique de ladite pompe à débit étalonné (16, 18) est légèrement supérieur à celui de la pompe de fourniture (12, 14).

3. Système de pompage de fluide selon la revendication 2, caractérisé en ce que ledit moyen d'entraînement comprend un moteur pas-à-pas (32) entraînant une came (38) et un moyen à circuit de commande électrique (34) commandant la vitesse de rotation dudit moteur.

4. Système de pompage de fluide selon la revendication 3, caractérisé en ce que ledit moyen à circuit (34) est programmé pour accélérer la vitesse de rotation dudit moteur (32) pendant la course de rétraction du piston de la pompe de fourniture (12).

5. Système de pompage de fluide selon l'une quelconque des revendications 1 à 4, caractérisé par:

—un second moyen de sortie d'écoulement de fluide unidirectionnel (70) pour ledit cylindre (14) de ladite première pompe (12, 14); et

—un troisième moyen d'entrée d'écoulement de fluide unidirectionnel (66) pour le cylindre (18) de ladite seconde pompe (16, 18).

6. Système de pompage de fluide selon l'une quelconque des revendications 1 à 5, caractérisé en ce que ledit couplage à mouvement libre (22) comporte en outre un moyen élastique (64) agissant sur le déplacement du piston (16) de la pompe à débit étalonné dans la direction d'avance avec une force déterminant la pression de fluide dans le cylindre (18) de ladite pompe à débit étalonné lors de la course d'avance (course de vidange) du piston (16).

7. Système de pompage de fluide selon la revendication 6, caractérisé en ce que ledit moyen d'entraînement (32, 38) comporte une came (38) ayant un profil (44) déterminant la configuration du déplacement du piston (12) de ladite pompe de fourniture (12, 14), ledit profil (44) provoquant une rétraction rapide dudit piston (12) de la pompe de fourniture, au cours d'une très petite fraction d'un seul tour de ladite came (38), et une vitesse de parcours relativement plus faible et régulière lors de la course d'avance (course de pompage) dudit piston (12).

8. Système de pompage de fluide selon la revendication 7, caractérisé en ce que ledit moyen d'entraînement comporte en outre un moteur pas-à-pas (32) couplé de façon à faire tourner ladite came (38) et un circuit électrique (34) pour commander ledit moteur pas-à-pas.

9. Système de pompage de fluide selon l'une quelconque des revendications 1 à 8, caractérisé en ce que ledit moyen de couplage comporte une tringle (22) positivement reliée au piston (12) de la pompe de fourniture (12, 14) et une liaison à mouvement libre avec le piston (16) de la pompe à débit étalonné (16, 18), ladite liaison à mouvement libre permettant un déplacement relatif limité desdits pistons (12, 16) au début des courses de rétraction (admission) et d'avance (pompage) du piston (12) de la pompe de fourniture; ledit commutateur électrique (56, 58) comportant des organes de contact électrique respectifs sur ladite tringle (22) et sur le piston (16) de la pompe à débit étalonné disposés de façon à buter l'un contre l'autre pour définir la limite de course en mouvement libre dans une direction, entre ladite tringle (22) et le piston (16), et fermer le commutateur pour signaler le début de la course de rétraction (course d'admission) dudit piston (16) de la pompe à débit étalonné; un moyen élastique (64) agissant entre ladite tringle (22) et le piston (16) de la pompe à débit étalonné pour repousser ladite tringle (22) et le piston (16) vers ladite limite, avec une force déterminant la pression de fluide régnant dans le cylindre (18) de la pompe à débit étalonné, au début de la course d'avance (course de vidange) du piston (16) de la pompe à débit étalonné.

10. Système de pompage de fluide selon l'une quelconque des revendications 3 à 9, caractérisé par:

—un capteur (40) prévu pour détecter la position angulaire de ladite come (38) et signaler la fin de la course de rétraction du piston (16) de la pompe à débit étalonné; et

—un circuit de commande de système (34) électriquement connecté pour recevoir des signaux dudit commutateur électrique (56, 58) et dudit capteur (40), pour élaborer des signaux de sortie commandant ledit moteur pas-à-pas (32).

11. Système de pompage de fluide selon l'une quelconque des revendications 5 à 10, caractérisé par:

—une pluralité de sources (24) de solvants sélectionnés et un moyen formant passage d'écoulement (26), reliant lesdites sources audit troisième moyen d'entrée d'écoulement unidirectionnel (66) pour le cylindre (18) de ladite seconde pompe;

—des clapets respectifs actionnés électriquement (72) pouvant être actionnés pour commander le débit provenant desdites sources (24) vers ledit troisième moyen d'entrée unidirectionnel (66); et

—un moyen connectant électriquement lesdits clapets (72) pour recevoir le signal de commande dudit circuit électrique (34).

12. Système de pompage de fluide selon la revendication 11, caractérisé en ce que ledit circuit de commande électrique (34) est programmé pour ouvrir lesdits clapets électriquement actionnés (72) seulement lors de la course de rétraction du piston de mesure (16).

13. Système de pompage de fluide selon l'une quelconque des revendications 1 à 12, caractérisé en ce que le système de pompage de fluide est utilisé en tant que système de fourniture de solvant pour chromatographes liquides à haute pression.

9

FIG. 1

FIG. IA

0 085 171

FIG.2